Europäisches Patentamt

European Patent Office

Office européen des brevets

(11) Numéro de publication: **0 408 409 A2**

# (12) DEMANDE DE BREVET EUROPEEN

(21) Numéro de dépôt: 90401782.9

(22) Date de dépôt: 22.06.90

(51) Int. Cl.5: **G06F 3/033**

(30) Priorité: 28.06.89 FR 8908628

(43) Date de publication de la demande:
16.01.91 Bulletin 91/03

(84) Etats contractants désignés:
DE GB IT

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Chouin, Michel**
**21bis avenue du Maréchal Joffre**
**F-78800 Houilles(FR)**

(74) Mandataire: **Berger, Helmut et al**
**Cabinet Z. WEINSTEIN 20, avenue de**
**Friedland**
**F-75008 Paris(FR)**

(54) Système à ordinateur de bord à affichage sélectionné.

(57) L'invention concerne un système à ordinateur de bord à affichage sélectionné d'une fonction parmi une pluralité de fonctions, appelée menu.

Le système est du type comprenant un dispositif d'affichage (2) qui comporte des moyens d'affichage du menu et des moyens d'affichage des données relatives à la fonction sélectionnée et un dispositif de commande (3) de l'affichage par l'intermédiaire dudit ordinateur (1) relié à des capteurs des valeurs des paramètres correspondant auxdites fonctions (en 8). Le système est caractérisé en ce que les moyens d'affichage (2) du menu ($a_1$ à $a_6$) et des données se trouvent dans une même zone d'affichage transformable alternativement en zone d'affichage du menu et en zone d'affichage des données.

L'invention est utilisable dans des véhicules automobiles.

FIG. 1

## SYSTÈME À ORDINATEUR DE BORD À AFFICHAGE SÉLECTIONNÉ.

L'invention concerne un système à ordinateur de bord à affichage sélectionné d'une fonction parmi une pluralité de fonctions, appelée menu, du type comprenant un dispositif d'affichage qui comporte des moyens d'affichage du menu et des moyens d'affichage des données relatives à la fonction sélectionnée et un dispositif de commande de l'affichage par l'intermédiaire dudit ordinateur relié à des capteurs des valeurs des paramètres correspondant auxdites fonctions.

Dans les systèmes à ordinateur de bord à affichage sélectionné, qui sont connus, le dispositif d'affichage comprend deux zones d'affichage distinctes, à savoir une première zone indiquant les différentes fonctions possibles, où, en général, les inscriptions sont sérigraphiées sur une plaque de verre ou de plastique transparente et la fonction sélectionnée est éclairée par une lampe spécifique, et une deuxième zone indiquant la valeur numérique de la fonction sélectionnée, accompagnée le plus souvent par les unités correspondantes et même quelquefois par une symbolisation de la fonction.

L'inconvénient de tels systèmes est la surface importante qu'il faut prévoir pour l'affichage, soit dans une zone privilégiée de lecture telle que le tableau de bord ou dans une zone complémentaire d'informations sur la planche de bord qui cependant est également très occupée par des commandes d'appareils ou dispositifs tels que la radio ou la climatisation.

L'invention a pour but de proposer un système du type défini plus haut qui ne présente plus les inconvénients qui viennent d'être énoncés des systèmes connus.

Pour atteindre ce but, le système selon l'invention est caractérisé en ce que les moyens d'affichage du menu et des données se trouvent dans une même zone d'affichage transformable alternativement en zone d'affichage du menu et en zone d'affichage des données.

Selon une caractéristique avantageuse de l'invention, le dispositif de commande comprend un organe de sélection d'une fonction qui est pourvu d'un contact électrique susceptible d'être fermé lors d'une manipulation dudit organe et monté dans un circuit électrique destiné à assurer l'affichage du menu.

Selon une autre caractéristique avantageuse de l'invention, l'organe de sélection comporte des moyens mobiles entre une position de fermeture du contact électrique précité et une position d'ouverture de ce contact, qui sont disposés dans une zone de préhension de l'organe de façon à pouvoir être amenés dans leur position de fermeture du contact lors de la préhension de l'organe de sélection.

Selon encore une autre caractéristique de l'invention, le moyen d'affichage est une matrice de points à cristal liquide.

L'invention sera mieux comprise, et d'autres buts caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

- les figures 1 et 2 représentent, sous forme d'un schéma bloc, un système à ordinateur à affichage sélectionné selon l'invention, aux états respectivement d'affichage du menu et des données relatives à une fonction sélectionnée ;
- la figure 3 illustre en a et b deux modes d'affichage du menu ;
- la figure 4 est une vue en coupe axiale partielle schématique selon la ligne IV-IV de la figure 5, du dispositif de commande d'affichage indiqué en IV à la figure 1 ;
- la figure 5 est une vue en direction de la flèche V de la figure 4, le bouton rotatif ayant été enlevé ;
- la figure 6 est une vue en direction de la flèche VI de la figure 4 ; et
- la figure 7 est une vue en coupe selon la ligne VII-VII de la figure 4.

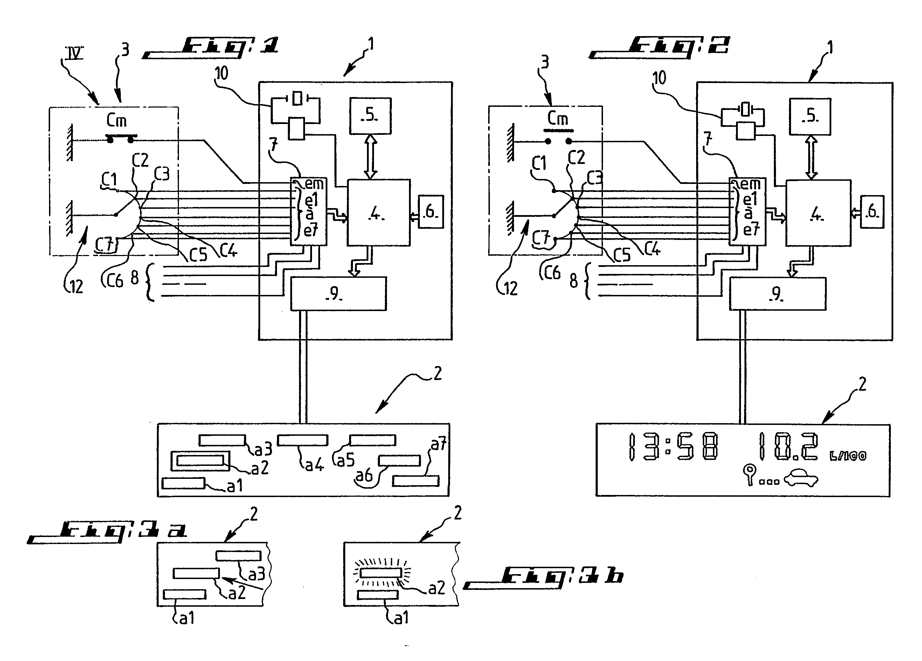

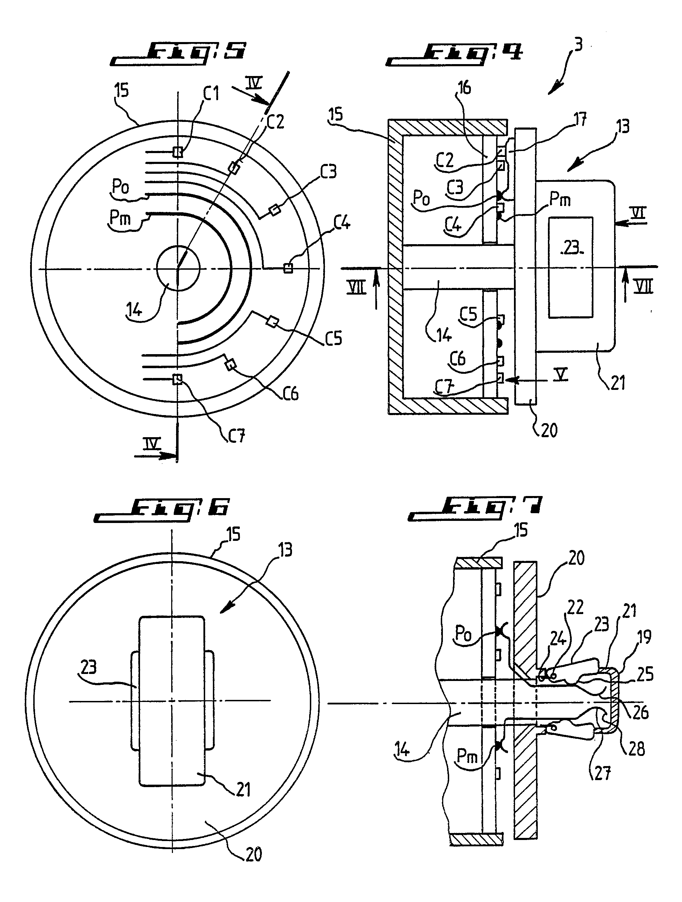

Selon les figures 1 et 2, un système à ordinateur, à affichage sélectionné, selon l'invention, comprend essentiellement un ordinateur 1 auquel sont associés un dispositif d'affichage 2 et un dispositif de commande 3 de l'affichage. Un tel système est notamment utilisable à bord de véhicules automobiles et peut être monté sur le tableau de bord de ceux-ci. Le système permet l'affichage, d'une part, du menu, c'est-à-dire des différentes fonctions devant être affichées telles que par exemple dans le cas d'un véhicule automobile la température extérieure, la vitesse moyenne, la consommation moyenne et instantanée de carburant, l'autonomie du véhicule, le temps écoulé, la distance parcourue, et, d'autre part, des données relatives à une fonction sélectionnée parmi les fonctions affichables.

L'ordinateur 1 comprend essentiellement une unité centrale 4 telle qu'un micro-processeur, des mémoires vive 5 et morte 6 respectivement du type RAM et ROM, une interface 7 par l'intermédiaire de laquelle l'unité centrale 4 est reliée, d'une part, au dispositif de commande d'affichage 3 et, d'autre part, par des connexions 8, a un certain nombre de capteurs (non représentés) des valeurs des paramètres correspondants aux différentes fonctions affichables ainsi qu'un dispositif dit centrale de commande 9 du dispositif d'affichage 2. On a représenté en 10 schématiquement un circuit d'horloge à quartz qui est associé à l'unité centrale.

Le dispositif d'affichage 2 comprend soit un tube cathodique, soit une matrice à points réalisée en technologie cristal liquide, tube fluorescent ou autre technologie équivalente connue en soi, qui permet d'afficher dans une même zone d'affichage, alternativement, le menu, c'est-à-dire l'ensemble des fonctions affichables, à des champs de visualisation spécifiques indiqués en $a_1$ à $a_7$ (figure 1), et les données relatives à une fonction sélectionnée (figure 2). La fonction sélectionnée parmi celles apparaissant sur la zone d'affichage selon la figure 1 est démarquée des autres fonctions par une représentation différente ou par un signe particulier, tel que par exemple une inscription claire sur fond sombre alors que toutes les autres sont indiquées sur fond clair, un encadrement de l'inscription, comme cela est illustré à la figure 1, une flèche ou un clignotement tel qu'illustré respectivement aux figures 3a et 3b ou un affichage par une couleur différente.

Chaque fonction peut être indiquée par un texte, un mot ou une abbréviation, tandis que les données peuvent être indiquées par des valeurs numériques complétées le cas échéant par l'unité ainsi qu'une symbolisation de la fonction sélectionnée. Ainsi, on voit apparaître à la figure 2 à gauche de la zone d'affichage, l'heure et à droite la vitesse accompagnée par l'unité L/100. En dessous est affichée la symbolisation de la fonction.

Le dispositif de commande 3 de l'affichage, par l'intermédiaire de l'ordinateur 1 comprend essentiellement, selon la figure 1, un contact $c_m$ de commande de l'affichage du menu, qui met l'entrée $e_m$ de l'interface 7 au potentiel de la masse lorsqu'il est fermé, ainsi qu'un commutateur rotatif 12 ayant une pluralité de bornes de contact $c_1$ à $c_7$ dont chacune correspond à une fonction du menu et permettant la sélection d'une fonction souhaitée par la mise à la masse de l'entrée correspondante $e_1$ à $e_7$ de l'interface 7.

En se reportant aux figures 4 à 7, on décrira ci-après un mode de réalisation d'un dispositif de commande 3.

Ce dispositif comprend un bouton 13 qui est rotatif autour d'un axe 14 logé dans un boîtier 15. L'axe 14 traverse une plaquette à circuits imprimés rigide 16 sur laquelle sont sérigraphiés, sous forme de couches épaisses, des circuits résistifs comme cela ressort notamment de la figure 5. Le circuit imprimé comprend les 7 plots de contact $c_1$ à $c_7$ déjà indiqués à la figure 1 dont chacun est relié à une des entrées $e_1$ à $e_7$ de l'interface 7. Les plots de contact sont arrangés selon un arc de cercle et angulairement régulièrement séparés l'un de l'autre. Le circuit intégré comporte en outre deux pistes électriquement conductrices $p_m$ et $p_o$ qui sont concentriques à l'arc de cercle déterminé par les plots $c_1$ à $c_7$ et sont reliées respectivement à l'entrée $e_m$ de l'interface 7 et à la masse. La piste $p_m$ est située radialement interne par rapport à la piste de masse $p_o$ et fait partie du circuit d'affichage du menu.

Le bouton rotatif 13 présente sur une face plane parallèle à et en regard du circuit intégré 16, une pièce 17 en un métal conducteur tel que du cuivre ou du laiton, qui permet d'établir la liaison électrique entre chaque plot de contact $c_1$ à $c_7$ et la piste de masse $p_o$, en fonction de la position angulaire du bouton rotatif 13.

Comme le montre la figure 7, le bouton 13 comprend en outre un élément de préhension 19 de forme sensiblement parallélèpipédique qui fait perpendiculairement saillie d'une partie 20 en forme de disque perpendiculaire à l'axe 14 et dont la surface en regard du circuit imprimé 16 porte la pièce de connexion 17. L'élément de préhension 19 est creux et présente dans chacune de ses faces latérales 21 une fenêtre dans laquelle est montée pivotante autour d'un axe 22 une palette 23. Chaque palette est mobile entre une position où elle fait partiellement saillie vers l'extérieur de la surface latérale 21, comme cela est illustré à la figure 7, et une position de pivotement vers l'intérieur de l'élément de préhension 19. On constate que les palettes 23 se trouvent dans la zone de préhension habituelle de l'élément 19 si bien que leur pivotement vers l'intérieur puisse s'effectuer lorsque l'opérateur du dispositif de commande 13 prend en main le bouton. A l'état de repos du dispositif de commande, les palettes sont maintenues écartées par un ressort tel que par exemple une corde à piano conformée en épingle et schématiquement indiquée en 24.

La surface interne de chaque palette 23 porte un bossage 25 de commande d'une languette électriquement conductrice 26, 27. Les extrémités 28 des languettes qui sont situées à l'intérieur de l'élément de préhension 19 sont conformées en éléments de contact électrique. Ces extrémités 28 sont amenées en contact lors d'un pivotement des palettes 23 vers leur position interne. Les languettes 26 et 27 associées aux deux palettes 23 sont de formes différentes et sont en contact permanent par leurs extrémités opposées à celles conformées en éléments de contact électriques 28, respectivement sur les pistes de menu $p_m$ et de masse $p_o$.

Les deux languettes 26 et 27 établissent un contact de type frottant permettant un nettoyage du contact du fait que celui-ci ne s'établira pas toujours au même endroit et est fonction de la prise en main du bouton.

Le système selon l'invention comprend encore des moyens de remise à zéro des différents paramètres, qui comportent une touche spécifique située soit à proximité des dispositifs d'affichage 2, soit sur le dispositif de commande 3. On pourrait aussi conformer le bouton rotatif en organe de remise à zéro. Il pourrait à cette fin être axialement mobile. La remise à zéro s'obtiendrait alors en poussant ou en tirant le bouton. La dernière solution est préférable, car elle exige une action volontaire constituant une mesure de protection contre des fausses manoeuvres.

On décrira ci-après le fonctionnement du système qui vient d'être décrit.

Lorsque l'opérateur prend en main le bouton rotatif 13 il actionne les palettes 23 qui pivotent vers l'intérieur et poussent les languettes 26, 27 dans leur position de contact électrique. Ceci correspond à la fermeture du contact $c_m$ à la figure 1 et provoque la mise à la masse de l'entrée $e_m$ de l'interface 7 de l'ordinateur 1. Celui-ci commande alors l'affichage du menu sur le dispositif d'affichage 2. Si au moment de la préhension du bouton rotatif 13 celui-ci se trouve dans sa position angulaire correspondant au plot de contact $c_2$, l'ordinateur 1 reçoit un deuxième signal de masse à l'entrée $e_2$ de l'interface 7. En réponse à ce deuxième signal de masse l'ordinateur commande l'indication de la fonction correspondant à l'entrée $e_2$. On voit alors l'indication du champ d'affichage $a_2$ se démarquer des autres par encadrement de l'inscription, clignotement ou une flèche comme cela est illustré schématiquement aux figures 1, 3a et 3b.

Lorsque l'opérateur relâche le bouton 13 les palettes 23 reviennent vers leur position écartée représentée à la figure 7 ce qui permet aux languettes 26, 27 de se séparer l'une de l'autre. Ce fait est illustré à la figure 2 par l'ouverture du contact $c_m$. L'ordinateur 1 commande alors l'affichage des données ou informations relatives à la fonction correspondant à la position angulaire du bouton rotatif, c'est-à-dire par exemple de la valeur numérique de la fonction, de l'unité correspondante et, le cas échéant, d'une symbolisation de la fonction.

La conception du bouton 13 permet également un changement de fonction sans passer par le stade de l'affichage du menu. Il suffit à cette fin de prendre le bouton par les petites faces de l'élément de préhension 19 sans actionner les palettes 23 et de tourner le bouton dans une autre position pour trouver directement la fonction correspondante.

**Revendications**

1. Système à ordinateur de bord à affichage sélectionné d'une fonction parmi une pluralité de fonctions, appelée menu, du type comprenant un dispositif d'affichage qui comporte des moyens d'affichage du menu et des moyens d'affichage des données relatives à la fonction sélectionnée et un dispositif de commande de l'affichage par l'intermédiaire dudit ordinateur relié à des capteurs des valeurs des paramètres correspondant auxdites fonctions, caractérisé en ce que les moyens d'affichage (2) du menu ($a_1$ à $a_6$) et des données se trouvent dans une même zone d'affichage transformable alternativement en zone d'affichage du menu et en zone d'affichage des données et en ce que le dispositif de commande (3) comprend un organe de sélection (13) d'une fonction propre à sélectionner alternativement toutes les fonctions et qui est pourvu d'un contact électrique (28) susceptible d'être fermé lors d'une manipulation dudit organe (13) et monté dans un circuit électrique destiné à assurer l'affichage du menu.

2. Système selon la revendication 1, caractérisé en ce que l'organe de sélection (13) comporte des moyens (23) mobiles entre une position d'ouverture et une position de fermeture du contact électrique (28), qui sont disposés dans une zone de préhension (21) de l'organe (13) de façon à pouvoir être amenés dans leur position de fermeture du contact lors de la préhension de l'organe de sélection.

3. Système selon la revendication 2, caractérisé en ce que l'organe de sélection (13) est un bouton rotatif.

4. Système selon la revendication 3, caractérisé en ce que les moyens mobiles (23) précités sont formés par au moins une palette montée dans une zone de préhension (21) du bouton rotatif (13), pivotant entre une position où elle fait saillie vers l'extérieur de la zone de préhension (21) et une position enfoncée de fermeture du contact électrique (28) précité.

5. Système selon l'une des revendications 2 à 4, caractérisé en ce que l'organe de commande (13) comprend un élément de contact électrique (17) de sélection d'une fonction du menu, qui se déplace sur une surface fixe (16) porteuse d'un certain nombre de plots de contact ($c_1$ à $c_7$) dont chacun correspond à une fonction du menu et est relié à une entrée ($e_1$ à $e_7$) de l'ordinateur (1).

6. Système selon la revendication 5, caractérisé en ce que la surface (16) porteuse des contacts fixes porte des éléments de contact électrique de connexion du contact électrique d'affichage du menu (28) à l'entrée d'affichage de menu ($e_m$) de l'ordinateur (1).

7. Système selon l'une des revendications 5 ou 6, caractérisé en ce que les plots de contact ($c_1$ à $c_7$) sont disposés de façon angulairement décalée sur un arc de cercle, et que la surface de contact fixe (16) porte des pistes ($p_m$, $p_o$) en forme d'arcs de cercle, qui sont coaxiales à l'arc de cercle des plots de contact et respectivement forment la connexion précitée de contact électrique d'affichage de menu et une piste de liaison à la masse.

8. Système selon l'une des revendications précédentes, caractérisé en ce que le's moyens d'affichage (2) sont formés par une matrice de points.

EP 0 408 409 A2

Fig.2

Fig.1

Fig.3a

Fig.3b

Fig. 5

Fig. 4

Fig. 6

Fig. 7